Europäisches Patentamt

European Patent Office

Office européen des brevets

(11) Publication number: **0 114 058**
**B1**

(12) # EUROPEAN PATENT SPECIFICATION

(45) Date of publication of patent specification: **22.07.87**

(21) Application number: **84100212.4**

(22) Date of filing: **11.01.84**

(51) Int. Cl.⁴: **F 16 L 58/18, F 16 L 13/02**

(54) **Method for connecting pipes being provided with an inner protective cladding.**

(30) Priority: **17.01.83 NL 8300172**

(43) Date of publication of application:
**25.07.84 Bulletin 84/30**

(45) Publication of the grant of the patent:
**22.07.87 Bulletin 87/30**

(84) Designated Contracting States:
**AT BE CH DE FR GB IT LI LU NL SE**

(56) References cited:
**BE-A- 446 027**
**CH-A- 251 975**
**FR-A-1 488 628**
**FR-A-2 335 780**
**FR-E- 83 675**
**GB-A- 898 640**

(73) Proprietor: **Troost Pernis Groep B.V.**
**Elementenweg 8**
**NL-3201 LG Spijkenisse (NL)**

(72) Inventor: **Koopman, Hendrik**
**Sterrenlaan 11**
**NL-3297 TM Puttershoek (NL)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a method as described in the preamble of claim 1.

Such a method is known from GB—A—898 640.

Pipes are being connected with each other in field under often difficult circumstances. Under these circumstances it is cumbersome to apply heat insulating material before welding the coupling elements to one another. This heat insulating material is necessary to protect the internal lining from the affects of the welding heat.

It is the object of the invention to avoid these disadvantages. This is according to the invention achieved by the features as described in the characterizing part of claim 1.

By employing coupling elements with a relative large diameter, the distance from the weld for coupling the pipes to another to the internal lining is such that the heat transfer to the internal lining is so small, that it does not hamper the quality of the internal lining. The pipes can very easily be connected to another by welding the coupling elements to another. It is not necessary to have a high quality weld as in the prior art in which the weld should be of the same height as the thickness of the wall of the annular coupling element.

FR—E—83 675 discloses to pipes being provided with an internal lining and annular coupling elements. The coupling elements are connected by bolt-nut connection. The coupling elements are not welded to another.

FR—A—2 335 780 discloses two pipes being coupled by means of annular coupling elements. The coupling elements are being connected by bolt-nut connecting means. The inconvenience of a bolt-nut connection is that in order to avoid leakages stuffing material has to be sandwiched between the coupling elements, which material should also be provided with a protective layer.

The invention will be described more fully with reference to the accompanying drawings.

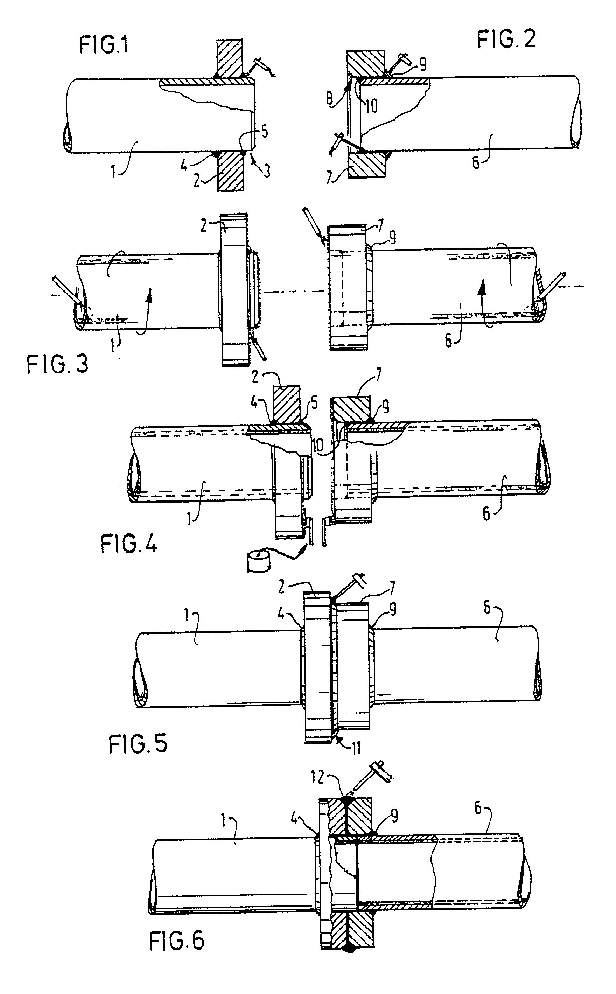

Figs. 1 to 6 illustrate the various stages in which the pipe parts to be interconnected are made and welded to one another in accordance with the method embodying the invention.

Referring to Fig. 1 the pipe 1 has slipped onto it an annular coupling element 2 so that a portion of length 3 of the pipe 1 protrudes out of the coupling element 2 subsequently by means of fillet welds 4 and 5 the coupling element 2 is sealed all around on the pipe 1. As shown in Fig. 2 an annular coupling element 7 is slipped onto a second pipe part 6 so that a portion 8 of the coupling element projects beyond the pipe part 6. By welds 9 and 10 the coupling element 7 is sealed to the pipe part 6. Preferably the distance 8 by which the coupling element 7 extends beyond the pipe part 6 is chosen to be equal to the distance 3 by which the pipe part 1 protrudes out of the coupling element 2. Subsequently the two pipe parts are provided on the inner side with a protective coating, for example, of synthetic resin by rotating the parts and introducing the protective material.

Then the two pipe parts are brought into contact with one another by the head ends. Before the pipe parts are contacted by the head ends, the head ends of the coupling elements may be smeared with layer of protective material (Fig. 4) in order to repair any damage, after which the coupling elements (Fig. 5) are interconnected by means of fillet welds 11. It should be noted that the diameter of one of the coupling elements, for example, the coupling element 2, is chosen to be larger than that of the other coupling element 7. It is thus possible to interconnect the coupling elements by means of a fillet weld (11).

Since the two coupling elements are welded to the associated pipe parts prior to the application of the protective coating there is no risk of burning or overheating of the protective coating due to the welding heat. Since the coupling elements are welded to one another at a relatively large distance from the pipes and the protective coating therein and since the thermal capacity of the coupling elements is relatively high, the welding heat is prevented from reaching the protective coating to a significant extent and from causing the coating to flow and hence to deteriorate. The diameters of the coupling elements may be so large that it can be ensured that the welding heat will not attain the protective coating. In the method embodying the invention the sole work to be done in the field is welding the coupling elements. Since the pipe parts to be joined with the associated coupling elements and the protective coating are made in the factory the quality check is appreciably simplified and can be more readily carried out than in the case of welding the coupling elements to the pipe parts in the field.

Figure 6 shows an embodiment in which the diameters of the coupling elements are equal to one another and in which a V weld 12 is made between the annular coupling elements.

## Claims

1. A method of manufacturing and joining pipes (1, 6) provided with an internal protective coating in which one of the pipes (6) has welded to it an annular coupling element (7) partly extending beyond the head of the pipe (6), the pipe (6) is provided on the inner side with the protectinve coating, the other pipe (1) has welded to it an annular coupling element (2) so that the head end of the pipe (1) protrudes out of the coupling element (2), the pipe (1) is provided on the inner side with a protective coating, the pipes (1, 6) are brought into contact with one another by the head ends and the coupling elements are welded to one another at a radial distance from the pipes, characterized in that the coupling elements are radial flanges and said distance is so many times greater than the wall thickness of the pipes (1, 6) that the head of the welding of the coupling elements to one another does not damage the coating of the pipes.

2. A method as claimed in claim 1 characterized in that a layer of protective material is applied to the head ends of the coupling elements prior to bringing them into contact with one another.

3. A method as claimed in claims 1 and 2 characterized in that the distance (8) by which the coupling element extends beyond the first pipe (6) is equal to the distance (3) by which the second pipe (1) protrudes out of the coupling element (2) arranged thereon.

4. A method as claimed in claims 1 to 3 characterized in that the diameter of one (2) of the coupling elements is chosen to be larger than that of the other coupling element (7).

5. A method as claimed in claim 4 characterized in that the coupling elements (2, 7) are interconnected by a fillet weld (11).

## Patentansprüche

1. Verfahren zur Herstellung und Verbindung von Rohren (1, 6), die mit einer inneren Schutzschicht versehen sind, wobei an einem der Rohre (6) ein ringförmiges Kupplungselement (7) angeschweißt ist, welches teilweise über den Kopf des Rohres (6) vorsteht und das Rohr (6) auf der Innenseite mit der Schutzschicht versehen ist, während an dem anderen Rohr (1) ein ringförmiges Kupplungselement (2) derart angeschweißt ist, daß das Kopfende des Rohres (1) aus dem Kupplungselement (2) hervorsteht und wobei das Rohr (1) auf der Innenseite mit einer Schutzschicht versehen ist und die Rohre (1, 6) miteinander über die Kopfenden in Berührung gebracht und die Kupplungselemente in einem radialen Abstand von den Rohren miteinander verschweißt werden, dadurch gekennzeichnet, daß die Kupplungselemente als radiale Flansche ausgebildet sind, und daß die radiale Abstand um so viel mal größer als die Wanddicke der Rohre (1, 6) ist, daß die beim gegenseitigen Verschweißen der Kupplungselemente erzeugte Wärme die innere Schutzschicht der Rohre nicht beschädigt.

2. Verfahren nach Anspruch 1, dadurch gekennzeichnet, daß eine Schutzschichtlage auf die Kopfenden der Kupplungselemente aufgebracht wird, bevor sie in Kontaktberührung miteinander gebracht werden.

3. Verfahren nach den Ansprüchen 1 und 2, dadurch gekennzeichnet, daß der Abstand (8), mit dem das Kupplungselement über das erste Rohr (6) vorsteht, gleich ist dem Abstand (3), mit dem das zweite Rohr (1) aus dem Kupplungselement (2) vorsteht, das daran angeordnet ist.

4. Verfahren nach den Ansprüchen 1 bis 3, dadurch gekennzeichnet, daß der Durchmesser des einen (2) Kupplungselementes größer gewählt ist als der Durchmesser des anderen Kupplungselementes (7).

5. Verfahren nach Anspruch 4, dadurch gekennzeichnet, daß die Kupplungselemente (2, 7) durch eine Kehlschweißnaht (11) miteinander verbunden sind.

## Revendications

1. Procédé de fabrication et de raccordement de tuyaux (1, 6) muni d'un revêtement interne de protection dans lequel l'un des tuyaux (6) comporte un élément annulaire de raccordement (7) qui lui est soudé et qui s'étend au delà de la tête du tuyau (6), le tuyau (6) étant muni intérieurement du revêtement de protection, l'autre tuyau (1) comporte un élément annulaire de raccordement (2) qui lui est soudé de sorte que l'extrémité de tête du tuyau (1) fait saillie hors de l'élément de raccordement (2), le tuyau (1) étant muni intérieurement d'un revêtement de protection, les tuyaux (1, 6) sont amenés en contact l'un avec l'autre par leurs extrémités de tête et les éléments de raccordement sont soudés l'un à l'autre à une certaine distance radiale des tuyaux, caractérisé en ce que les éléments de raccordement sont des brides radiales et que ladite distance est tellement supérieure à l'épaisseur de paroi des tuyaux (1, 6) que la chaleur du soudage des éléments de raccordements l'un à l'autre n'endommage pas le revêtement des tuyaux.

2. Procédé selon la revendication 1, caractérisé en ce qu'une couche de matériau de protection est appliquée aux extrémités de tête des éléments de raccordement avant de les amener en contact l'un avec l'autre.

3. Procédé selon les revendications 1 et 2, caractérisé en ce que la distance (8) sur laquelle l'élément de raccordement s'étend au delà du premier tuyau (6) est égale à la distance (3) sur laquelle le deuxième tuyau (1) fait saillie hors de l'élément de raccordement (2) fixé sur lui.

4. Procédé selon l'une des revendications 1 à 3, caractérisé en ce que le diamètre de l'un (2) des éléments de raccordement est choisi de manière à être supérieur à celui de l'autre élément de raccordement (7).

5. Procédé selon la revendication 4, caractérisé en ce que les éléments de raccordement (2, 7), sont réunis par une soudure d'angle (11).

FIG.1

FIG.2

FIG.3

FIG.4

FIG.5

FIG.6